# EUROPEAN PATENT APPLICATION

(11) **EP 4 617 637 A1**
(43) Date of publication of application: **17.09.2025**
(21) Application number: 25158941.2
(22) Date of filing: 19.02.2025
(51) Int. Cl.: G01M 11/02

(54) **OPTICAL FIBER CHARACTERISTIC MEASUREMENT APPARATUS AND OPTICAL FIBER CHARACTERISTIC MEASUREMENT METHOD**

(30) Priority: 14.03.2024 JP 2024040397
(71) Applicant: Yokogawa Electric Corporation, Tokyo 180-8750 (JP)
(72) Inventor: Suzuki, Yuta, Musashino-shi, Tokyo, 180-8750 (JP); Tezuka, Shin-ichirou, Musashino-shi, Tokyo, 180-8750 (JP); Honma, Masayoshi, Musashino-shi, Tokyo, 180-8750 (JP)
(74) Representative: Zimmermann, Tankred Klaus

(57) **Abstract**

An optical fiber characteristic measurement apparatus (10) includes a first light source (13) configured to emit first superimposition light to be superimposed on pump light, a pump light amplifier (15) configured to amplify light in which the pump light and the first superimposition light are combined, a circulator (24) configured to cause amplified light output from the pump light amplifier (15) to be incident on a first end of a fiber under test (80) and configured to take out return light from the fiber under test (80), a filter (16) configured to attenuate a component of the first superimposition light contained in at least one of the amplified light or the return light, and a measurement unit (43) configured to measure the characteristic of the fiber under test (80) by detecting the return light.

## Description

### TECHNICAL FIELD

The present disclosure relates to an optical fiber characteristic measurement apparatus and an optical fiber characteristic measurement method.

### BACKGROUND

Methods for measuring the characteristics of optical fibers by detecting scattered light that have occurred within the optical fibers are conventionally known. See, for example, Patent Literature (PTL) 1.

### CITATION LIST

### Patent Literature

PTL 1: JP 2020-41843 A

### SUMMARY

The characteristic of a fiber under test is measured by causing pump light to be incident on the fiber under test, based on the detection intensity of return light, which is scattered or reflected by the fiber under test and returned. Increasing the detection intensity of the return light improves the measurement accuracy of the characteristic of the fiber under test.

The detection intensity of the return light is increased by amplifying the pump light to be input into the fiber under test, or by amplifying the return light itself. However, when the pump light or the return light is amplified by an optical amplifier, a giant pulse may occur. The giant pulse is a pulse with excessive optical power, and may destroy an optical detector.

It would be helpful to provide an optical fiber characteristic measurement apparatus and an optical fiber characteristic measurement method that can improve the measurement accuracy of the characteristic of a fiber under test, while preventing the occurrence of a giant pulse.
(1) An optical fiber characteristic measurement apparatus according to some embodiments includes:
   a first light source configured to emit first superimposition light to be superimposed on pump light;
   a pump light amplifier configured to amplify light in which the pump light and the first superimposition light are combined;
   a circulator configured to cause amplified light output from the pump light amplifier to be incident on a first end of a fiber under test, and configured to take out return light from the fiber under test;
   a filter configured to attenuate a component of the first superimposition light contained in at least one of the amplified light or the return light; and
   a measurement unit configured to measure the characteristic of the fiber under test by detecting the return light.
      Superimposing the first superimposition light on the pump light prevents the formation of excessive population inversion in the pump light amplifier. As a result, the occurrence of a giant pulse in the pump light amplifier is prevented. In addition, the gain of the pump light in the pump light amplifier is increased to the extent that the frequency of the occurrence of a giant pulse can be reduced. As a result, the measurement accuracy of the characteristic of the fiber under test is increased.
(2) In the optical fiber characteristic measurement apparatus according to (1) above, the filter may be connected between the circulator and the measurement unit. This attenuates a noise component contained in the return light. As a result, the measurement accuracy of the characteristic of the fiber under test is improved.
(3) In the optical fiber characteristic measurement apparatus according to (1) or (2) above, the filter may be connected between the pump light amplifier and the circulator. This prevents the occurrence of induced Brillouin scattered light originating from the component of the first superimposition light. The induced Brillouin scattered light originating from the component of the first superimposition light limits the length of the fiber under test. Preventing the occurrence of the induced Brillouin scattered light originating from the component of the first superimposition light relaxes the limitation on the length of the fiber under test.
(4) In the optical fiber characteristic measurement apparatus according to any one of (1) to (3) above, the first light source may be configured to emit the first superimposition light as a direct current component of light. When the first superimposition light is emitted as the direct current component of light, the light source is realized with a simple configuration.
(5) In the optical fiber characteristic measurement apparatus according to any one of (1) to (4) above, the first light source may be configured to emit the first superimposition light as light with a direct current component and an alternating current component. The first superimposition light containing the alternating current component relaxes the limitation on the length of the fiber under test.
(6) In the optical fiber characteristic measurement apparatus according to (4) or (5) above, the first light source may be configured to control the intensity of the direct current component based on the detection intensity of the return light. Controlling the intensity of the direct current component of the first superimposition light based on the detection intensity of the return light realizes both prevention of the occurrence of a giant pulse in the pump light amplifier, and increase in the gain of the pump light in the pump light amplifier to the extent that the frequency of the occurrence of a giant pulse can be reduced.
(7) In the optical fiber characteristic measurement apparatus according to any one of (4) to (6) above, the first light source may be configured to control the intensity of the direct current component based on the length of a time period during which pulsed light is turned off, when the pulsed light is emitted as the pump light. Controlling, by the first light source, the intensity of the direct current component of the first superimposition light based on the length of the time period during which the pulsed light as the pump light is turned off prevents the formation of excessive population inversion in the pump light amplifier.
(8) In the optical fiber characteristic measurement apparatus according to any one of (1) to (3) above, the first light source may be configured to emit the first superimposition light as pulsed light. By emitting the first superimposition light as the pulsed light, the gain of the pump light in the pump light amplifier is increased. As a result, the measurement accuracy of the characteristic of the fiber under test is increased.
(9) In the optical fiber characteristic measurement apparatus according to (8) above, the first light source may be configured to control a time period during which the first superimposition light is turned on, so that the pulsed light as the first superimposition light is turned on in a time period during which pulsed light as the pump light is turned off. This efficiently prevents the formation of excessive population inversion in the pump light amplifier.
(10) The optical fiber characteristic measurement apparatus according to any one of (1) to (9) above may further include:
   a second light source configured to emit second superimposition light to be superimposed on the return light; and
   a return light amplifier configured to amplify light in which the return light and the second superimposition light are combined.
   Superimposing the second superimposition light on the return light realizes both prevention of the occurrence of a giant pulse in the return light amplifier, and amplification of the return light to the extent that the frequency of the occurrence of a giant pulse can be reduced. As a result, the measurement accuracy of the characteristic of the fiber under test is improved.
(11) The optical fiber characteristic measurement apparatus according to any one of (1) to (10) above may further include an optical coupler configured to split, from the pump light, reference light to be combined with the return light in order to detect the return light. This realizes both prevention of the occurrence of a giant pulse and increase in the gain of the pump light to the extent that the frequency of the occurrence of a giant pulse can be reduced when the characteristic of the fiber under test is measured by the Brillouin optical correlation domain reflectometry (BOCDR).
(12) The optical fiber characteristic measurement apparatus according to any one of (1) to (10) above may further include an optical coupler configured to split, from the pump light, probe light to be incident on a second end of the fiber under test, the second end being opposite to the first end. This realizes both prevention of the occurrence of a giant pulse and increase in the gain of the pump light to the extent that the frequency of the occurrence of a giant pulse can be reduced when the characteristic of the fiber under test is measured by the Brillouin optical correlation domain analysis (BOCDA).
(13) An optical fiber characteristic measurement method according to some embodiments includes:
   emitting first superimposition light to be superimposed on pump light;
   amplifying light in which the pump light and the first superimposition light are combined;
   causing amplified light to be incident on a first end of a fiber under test;
   taking out return light from the fiber under test;
   attenuating a component of the first superimposition light contained in at least one of the amplified light or the return light; and
   measuring the characteristic of the fiber under test by detecting the return light.

The optical fiber characteristic measurement apparatus and the optical fiber characteristic measurement method according to the present disclosure can improve the measurement accuracy of the characteristic of the fiber under test, while preventing the occurrence of a giant pulse.

### BRIEF DESCRIPTION OF THE DRAWINGS

In the accompanying drawings:
FIG. 1 is a block diagram illustrating a configuration of an optical fiber characteristic measurement apparatus according to a comparative example;
FIG. 2 is a block diagram illustrating an example of a configuration of an optical fiber characteristic measurement apparatus according to the present disclosure;
FIG. 3 is a block diagram illustrating an example of the configuration of the optical fiber characteristic measurement apparatus in which a filter is disposed between a circulator and a return light amplifier;
FIG. 4 is a block diagram illustrating an example of the configuration of the optical fiber characteristic measurement apparatus in which a filter is disposed between a pump light amplifier and the circulator;
FIG. 5 is a block diagram illustrating an example of the configuration of the optical fiber characteristic measurement apparatus provided with a pulse generator that pulse-drives pump light and first superimposition light;
FIG. 6 is a graph illustrating an example of the waveform of the first superimposition light in each driving method;
FIG. 7A is a flowchart illustrating an example of an optical fiber characteristic measurement method including a process of filtering return light;
FIG. 7B is a flowchart illustrating an example of the optical fiber characteristic measurement method including a process of filtering amplified light;
FIG. 8 is a flowchart illustrating an example of the optical fiber characteristic measurement method including a process of feeding back the intensity of the return light to control of the first superimposition light;
FIG. 9 is a block diagram illustrating an example of the configuration of the optical fiber characteristic measurement apparatus according to the present disclosure when applied to the BOCDA;
FIG. 10 is a block diagram illustrating an example of the configuration of the optical fiber characteristic measurement apparatus in which second superimposition light is superimposed on the return light;
FIG. 11 is a block diagram illustrating an example of the configuration of the optical fiber characteristic measurement apparatus that is changed, in the example of the configuration in FIG. 10, not to superimpose the first superimposition light on the pump light; and
FIG. 12 is a block diagram illustrating an example of the configuration of the optical fiber characteristic measurement apparatus in which reference light functions as superimposition light.

### DETAILED DESCRIPTION

In order to measure the characteristic such as temperature or distortion of an optical fiber at each position along its length, there are conceivable methods of detecting scattered light or reflected light occurring inside the optical fiber, in response to light incident on the optical fiber. One of the optical fiber characteristic measurement methods is the Brillouin optical correlation domain reflectometry (BOCDR). The BOCDR includes causing pump light, which has been split from frequency-modulated light, to be incident on the optical fiber, and detecting interference light in which reference light, which has been split from the frequency-modulated light, interferes with Brillouin scattered light, which has occurred inside the optical fiber. The Brillouin scattered light is backscattered light that has occurred due to Brillouin scattering caused by the pump light incident on the optical fiber, and returns to an end on which the pump light is incident.

### (Comparative Example)

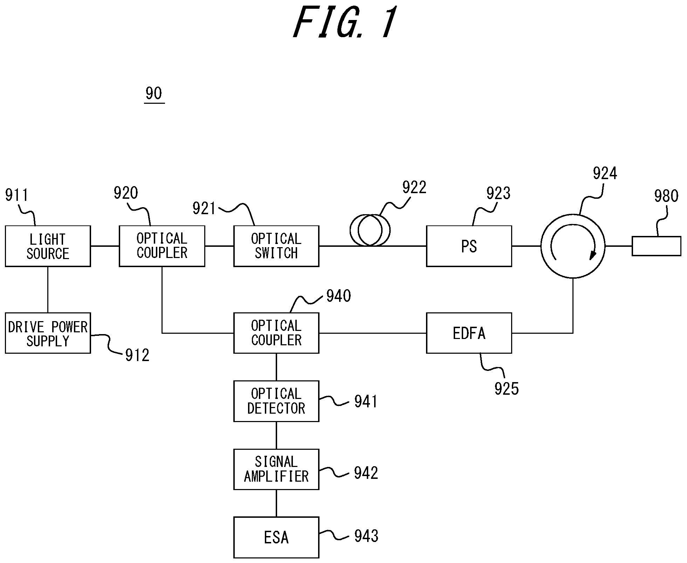

As illustrated in FIG. 1, an optical fiber characteristic measurement apparatus 90 according to a comparative example is provided with a light source 911, an optical coupler 920, an optical coupler 940, an optical detector 941, a signal amplifier 942, and an electric spectrum analyzer (ESA) 943.

In the optical fiber characteristic measurement apparatus 90, the light source 911 emits frequency-modulated (FM) light. The optical fiber characteristic measurement apparatus 90 is further provided with a drive power supply 912. The drive power supply 912 drives the light source 911 based on a signal corresponding to a modulation frequency for the frequency modulation. The light source 911 emits the frequency-modulated light based on the modulation frequency.

The light emitted from the light source 911 is split by the optical coupler 920 into pump light and reference light. The reference light proceeds to the optical coupler 940. The pump light proceeds to a fiber under test 980. The optical fiber characteristic measurement apparatus 90 is further provided with an optical switch 921, a delay fiber 922, a polarization scrambler (PS) 923, and a circulator 924 between the optical coupler 920 and the fiber under test 980. The optical switch 921 converts the pump light into pulsed light by chopping the pump light. The pump light that has been converted into the pulsed light proceeds to the fiber under test 980, through the delay fiber 922, the polarization scrambler 923, and the circulator 924. The delay fiber 922 adjusts the phase of the pump light. The polarization scrambler 923 makes the polarization of the pump light close to uniform. The circulator 924 directs the pump light, which has proceeded from the optical coupler 920, to the fiber under test 980.

The pump light incident on the fiber under test 980 causes Brillouin scattering to occur inside the fiber under test 980. Brillouin scattered light occurring by the Brillouin scattering inside the fiber under test 980 returns to the circulator 924. The circulator 924 does not allow the Brillouin scattered light, which is return light from the fiber under test 980, to proceed to the optical coupler 920, but directs the Brillouin scattered light to the EDFA 925 and the optical coupler 940. The EDFA 925 is an optical amplifier that amplifies the return light input from the circulator 924, and outputs the amplified light.

The optical fiber characteristic measurement apparatus 90 heterodyne-detects the Brillouin scattered light by detecting, with the optical detector 941, light in which the reference light and the Brillouin scattered light are combined by the optical coupler 940. The optical fiber characteristic measurement apparatus 90 amplifies, using the signal amplifier 942, a frequency component of a Brillouin gain spectrum (BGS) contained in the signal heterodyne-detected by the optical detector 941. The optical fiber characteristic measurement apparatus 90 measures the BGS by analyzing, using the ESA 943, the signal amplified by the signal amplifier 942, and calculates a Brillouin frequency shift (BFS), which is a peak frequency of the BGS. The BFS depends on the temperature or one-dimensional distortion of the fiber under test 980. Therefore, by calculating the BFS, the optical fiber characteristic measurement apparatus 90 can measure the temperature or distortion acting on the fiber under test 980, as the characteristic of the fiber under test 980.

In order to improve the measurement accuracy of the characteristic of the fiber under test 980, it is effective to increase the intensity of the Brillouin scattered light, which contains information on the characteristic such as temperature or distortion of the fiber under test 980. The intensity of the Brillouin scattered light is proportional to the intensity of the pump light incident on the fiber under test 980. Based on the above, it is effective to increase the intensity of the pump light in order to improve the measurement accuracy of the characteristic of the fiber under test 980.

However, when the pump light converted into the pulsed light is amplified in an optical amplifier, a giant pulse with excessive optical power occurs. The giant pulse may destroy the optical detector 941.

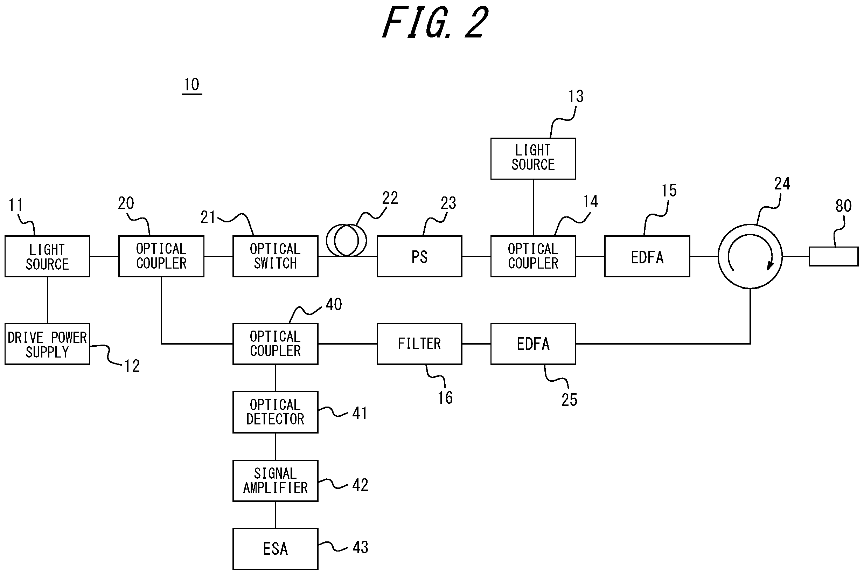

Therefore, the present disclosure describes an optical fiber characteristic measurement apparatus 10 (see FIG. 2) and an optical fiber characteristic measurement method that can increase the measurement accuracy of the characteristic of a fiber under test 80 (see FIG. 2) while preventing the occurrence of a giant pulse.

### (Example of configuration of optical fiber characteristic measurement apparatus 10 according to present disclosure)

An embodiment of the optical fiber characteristic measurement apparatus 10 that measures the characteristic of an optical fiber will be described below with reference to FIG. 2. The optical fiber characteristic measurement apparatus 10 according to the embodiment of the present disclosure measures the characteristic of a fiber under test (FUT) 80 using the BOCDR. The characteristic of the fiber under test 80 includes, for example, temperature distribution or distortion distribution of the fiber under test 80 along its length, vibration of the fiber under test 80, or other characteristics of the fiber under test 80. A characteristic such as the frequency, amplitude, or spectrum of scattered light or reflected light occurring inside the fiber under test 80 when pump light is input into the fiber under test 80 varies according to a physical quantity such as temperature or distortion that affects the fiber under test 80. Therefore, in the optical fiber characteristic measurement apparatus 10, the fiber under test 80 itself is used as a sensor. An end of the fiber under test 80 into which the pump light is input is also referred to as a first end. The other end of the fiber under test 80 opposite the first end is also referred to as a second end.

The optical fiber characteristic measurement apparatus 10 is provided with a light source 11, an optical coupler 20, an optical coupler 40, an optical detector 41, a signal amplifier 42, and an ESA 43.

The light source 11 emits frequency-modulated light. The light source 11 may be configured with a semiconductor laser element, such as a distributed feed-back laser diode (DFB-LD). The optical fiber characteristic measurement apparatus 10 is further provided with a drive power supply 12. The drive power supply 12 drives the light source 11 based on a modulation signal having a modulation frequency for frequency modulation. The light source 11 emits light that is frequency-modulated based on the modulation frequency.

The optical coupler 20 splits input light into two beams of light, and outputs the two beams of light. The optical coupler 20 directs one beam of the split light, as the pump light, to the fiber under test 80. The optical coupler 20 directs the other beam of the split light, as reference light, to the optical coupler 40.

The optical fiber characteristic measurement apparatus 10 is further provided with an optical switch 21, a delay fiber 22, a polarization scrambler (PS) 23, a light source 13, an optical coupler 14, an erbium doped fiber amplifier (EDFA) 15, and a circulator 24, between the optical coupler 20 and the fiber under test 80.

The optical switch 21 converts the pump light into pulsed light by chopping the pump light. The pump light converted into the pulsed light proceeds to the fiber under test 80 through the delay fiber 22, the polarization scrambler 23, and the circulator 24. The delay fiber 22 delays the progress of the pump light for a predetermined period of time. The delay fiber 22 may include, for example, an optical fiber of a predetermined length. The polarization scrambler 23 controls a polarization state so that polarization components contained in the pump light become close to uniform in each polarization direction.

The light source 13 emits first superimposition light to be superimposed on the pump light. The light source 13 is also referred to as a first light source. The light source 13 generates and emits the first superimposition light so that the frequency of the first superimposition light is shifted from the frequency of the pump light by a first superimposition differential frequency. The first superimposition differential frequency is determined according to the characteristics of a filter to be used for separating the first superimposition light from the pump light. The optical coupler 14 outputs, to the EDFA 15, light in which the first superimposition light emitted from the light source 13 is combined with the pump light.

The EDFA 15 is an optical amplifier that amplifies the input light and outputs the amplified light to the circulator 24. The amplified light is light in which the first superimposition light is combined with the pump light and amplified. The amplified light contains a component of the pump light and a component of the first superimposition light. The EDFA 15 is also referred to as a pump light amplifier because the EDFA 15 amplifies the pump light.

The circulator 24 directs, to the fiber under test 80, the amplified light input from the EDFA 15. By the incidence of the amplified light, which contains the component of the pump light, on the fiber under test 80, return light comes back from the fiber under test 80 to the end on which the amplified light is incident. The return light includes scattered light, such as Brillouin scattered light occurring due to Brillouin scattering inside the fiber under test 80, or reflected light occurring by the reflection of the amplified light inside the fiber under test 80. Brillouin scattering is a phenomenon that occurs inside the fiber under test 80 due to the incidence of the component of the pump light on the fiber under test 80. The circulator 24 directs the return light, which includes the Brillouin scattered light or the like returned from the fiber under test 80, to the optical coupler 40, not to the optical coupler 20. In other words, the circulator 24 takes out the return light from the fiber under test 80 so that the Brillouin scattered light can be detected by the optical detector 41. The circulator 24 may be replaced with an optical coupler.

The optical fiber characteristic measurement apparatus 10 is further provided with an EDFA 25 and a filter 16 between the circulator 24 and the optical coupler 40.

The EDFA 25 is an optical amplifier that amplifies the return light input from the circulator 24, and outputs the amplified light. The EDFA 25 is also referred to as a return light amplifier because the EDFA 25 amplifies the return light.

The filter 16 attenuates or blocks a component originating from the first superimposition light contained in the return light amplified by the EDFA 25. The component originating from the first superimposition light contained in the return light includes the first superimposition light itself, Rayleigh scattered light occurring due to the first superimposition light, Brillouin scattered light occurring due to the first superimposition light, or the like.

The optical coupler 40 combines the input two beams of light, i.e., the return light and the reference light into a single beam of light, and outputs the light.

The optical detector 41 heterodyne-detects the Brillouin scattered light by detecting the intensity of the light in which the return light and the reference light are combined, and outputs a heterodyne-detected electrical signal. The optical detector 41 may be configured with a photodiode (PD) or a phototransistor, for example.

The signal amplifier 42 amplifies a frequency component of a Brillouin gain spectrum (BGS) contained in the electrical signal heterodyne-detected by the optical detector 41, and outputs an amplified signal to the ESA 43. The signal amplifier 42 may be configured with an amplifier, for example.

The ESA 43 measures the BGS by analyzing the signal amplified by the signal amplifier 42, and calculates a Brillouin frequency shift (BFS), which is a peak frequency of the BGS. The BFS depends on the temperature or one-dimensional distortion of the fiber under test 80. Therefore, by calculating the BFS, the optical fiber characteristic measurement apparatus 10 can measure temperature or distortion acting on the fiber under test 80, as the characteristic of the fiber under test 80.

When the signal amplified by the signal amplifier 42 is acquired as an analog signal, the ESA 43 may convert the analog signal into a digital signal for analysis. In other words, the ESA 43 may include an A/D converter that converts the analog signal into the digital signal. The ESA 43 may acquire the signal amplified by the signal amplifier 42 as a digital signal. In this case, the signal amplifier 42 may be configured with an A/D converter, and may convert the signal in which the frequency component of the BGS is amplified into a digital signal and output the digital signal to the ESA 43.

The ESA 43 may include a signal interface that acquires signals from the signal amplifier 42. The signal interface may be configured to communicate signals based on various standards, such as RS-232C or RS-485.

The ESA 43 may be provided with a communication interface for communicably connecting to other components. The communication interface may be configured to be communicable based on a communication standard such as local area network (LAN). The communication standard is not limited to LAN, and may be various other standards.

The ESA 43 may be provided with an arithmetic unit. The arithmetic unit may be configured with a processor such as a central processing unit (CPU), or a dedicated circuit such as a field programmable gate array (FPGA). The arithmetic unit may be configured to execute a program that realizes the functions of the ESA 43.

The ESA 43 may be provided with a memory. The memory may store various types of information to be used in operations of the ESA 43, the program that realizes the functions of the ESA 43, or the like. The memory may function as work memory of the arithmetic unit. The memory may be constituted of, for example, a semiconductor memory or the like. The memory may be configured integrally with the arithmetic unit, or separately from the arithmetic unit.

The ESA 43 or the optical fiber characteristic measurement apparatus 10 may include an input device that accepts input from a user. The input device may include, for example, a keyboard, physical keys, a touch panel or touch sensor, or a pointing device such as a mouse.

The ESA 43 or the optical fiber characteristic measurement apparatus 10 may be provided with a display device. The display device may include various types of displays, such as a liquid crystal display. The ESA 43 or the optical fiber characteristic measurement apparatus 10 may be provided with an interface that outputs information to be displayed to an external display device. The ESA 43 or the optical fiber characteristic measurement apparatus 10 may be provided with an audio output device such as a speaker. The ESA 43 or the optical fiber characteristic measurement apparatus 10 may be provided with an interface that outputs audio information to an external speaker or the like.

As described above, the optical fiber characteristic measurement apparatus 10 according to the present disclosure measures the characteristic of the fiber under test 80, by causing the pump light to be incident on the fiber under test 80 and heterodyne-detecting the Brillouin scattered light that returns from the fiber under test 80. The optical detector 41, the signal amplifier 42, and the ESA 43 are also referred to as a measurement unit, because of detecting the Brillouin scattered light and measuring the characteristic of the fiber under test 80. The optical fiber characteristic measurement apparatus 10 can increase the intensity of the Brillouin scattered light by amplifying the pump light using the EDFA 15. Increasing the intensity of the Brillouin scattered light improves the calculation accuracy of the BFS. Improving the calculation accuracy of the BFS improves the measurement accuracy of the characteristic of the fiber under test 80.

Here, the optical fiber characteristic measurement apparatus 10 according to the present disclosure does not amplify only the pump light using the EDFA 15, but amplifies, using the EDFA 15, the light in which the first superimposition light is combined with the pump light, and performs attenuation or blocking, i.e., filtering of the component of the first superimposition light until the Brillouin scattered light is detected by the optical detector 41.

The EDFA 15 sometimes generates a giant pulse when amplifying the pulsed light. The giant pulse is a pulse with excessive optical power. The EDFA 15 forms population inversion by photoexciting ions added to a core of a fiber, and then performs optical amplification using induced emission. When the EDFA 15 amplifies the pulsed light, the population inversion is formed excessively while the pulsed light is turned off, and light emitted when the pulsed light is turned on becomes a giant pulse.

In other words, the cause of the EDFA 15 generating a giant pulse is the formation of the excessive population inversion. Therefore, by inputting, to the EDFA 15, the light in which the first superimposition light is combined with the pump light converted into the pulsed light, the formation of the excessive population inversion in the EDFA 15 is prevented. Specifically, the population inversion is formed in the EDFA 15 during the time when the pump light converted into the pulsed light is turned off, but inputting the first superimposition light to the EDFA 15 during the time when the pump light is turned off delays the formation of the population inversion. Delaying the formation of the population inversion prevents the formation of the excessive population inversion, regardless of the length of time during which the pump light is turned off. As a result, the occurrence of a giant pulse in the EDFA 15 is prevented.

Conversely, when only the pump light converted into the pulsed light is input to the EDFA 15, the excessive population inversion is likely to be formed in the EDFA 15 during the time when the pump light is turned off. As a result, when only the pump light converted into the pulsed light is input to the EDFA 15, a giant pulse is likely to occur in the EDFA 15. In other words, it is difficult to prevent the occurrence of a giant pulse while amplifying only the pump light converted into the pulsed light. The optical fiber characteristic measurement apparatus 10 according to the present disclosure can prevent the occurrence of a giant pulse while amplifying the pump light, by amplifying the light in which the first superimposition light is combined with the pump light converted into the pulsed light.

The higher the amplification factor, i.e., the gain of the EDFA 15, the more likely the excessive population inversion is formed. Therefore, the higher the gain of the EDFA 15, the greater the effect of preventing the occurrence of a giant pulse by combining the first superimposition light with the pump light.

Note that, delaying the formation of the population inversion by combining the first superimposition light with the pump light lowers the gain of the EDFA 15. However, the occurrence of a giant pulse is more easily prevented by combining the first superimposition light than by lowering the gain of the EDFA 15.

According to experiments, on the condition that the occurrence of a giant pulse is prevented, it has been found that the gain of the EDFA 15 when the first superimposition light is combined can be made larger than the gain of the EDFA 15 when the first superimposition light is not combined. Therefore, the optical fiber characteristic measurement apparatus 10 according to the present disclosure can amplify the pump light to a sufficient intensity to increase the measurement accuracy of the fiber under test 80, i.e., a sufficient intensity to increase the calculation accuracy of the BFS, while preventing the occurrence of a giant pulse, by combining the first superimposition light with the pump light.

In addition, the superimposition light can be changed with a simpler configuration than changing the gain of the EDFA 15 itself. For example, when the gain of the EDFA 15 itself is changed, the stability of the EDFA 15 may decrease. After setting the gain so that the EDFA 15 is stable, the stability of the EDFA 15 is ensured by adjusting the superimposition light.

The optical fiber characteristic measurement apparatus 10 according to the present disclosure is further provided with the EDFA 25 that amplifies the return light. The EDFA 25 amplifies a component of the Brillouin scattered light contained in the return light. The amplification factor of the component of the Brillouin scattered light may be lower than the amplification factor of the pump light by the EDFA 15. Therefore, the amplification factor, i.e., the gain of the EDFA 25 may be set to a low level so that the occurrence of a giant pulse can be prevented. The optical fiber characteristic measurement apparatus 10 according to the present disclosure may not be provided with the EDFA 25.

### <Filtering of superimposition light>

In the optical fiber characteristic measurement apparatus 10 according to the present disclosure, the amplified light, in which the first superimposition light is combined with the pump light and amplified, includes the component of the first superimposition light. The component of the first superimposition light is included in the return light unless filtered. Then, when the reference light and the return light are combined by the optical coupler 40 and heterodyne-detected by the optical detector 41, the BGS originating from the component of the first superimposition light appears. In other words, the component of the first superimposition light affects the waveform of the BGS, and reduces the calculation accuracy of the BFS, i.e., the measurement accuracy of the fiber under test 80. Therefore, the optical fiber characteristic measurement apparatus 10 according to the present disclosure may attenuate, using the filter 16, the component of the first superimposition light. The optical fiber characteristic measurement apparatus 10 may block the component of the first superimposition light using the filter 16.

In the optical fiber characteristic measurement apparatus 10, the difference between the frequency of the pump light and the frequency of the first superimposition light may be set according to the frequency characteristic of the filter 16. In other words, the frequency of the first superimposition light emitted by the light source 13 may be set according to the frequency characteristic of the filter 16 to a frequency that is quite different from the frequency of the pump light, so that the attenuation rate of the pump light is less than an allowable value and the first superimposition light is sufficiently attenuated. In addition, the frequency of the first superimposition light emitted by the light source 13 may be set according to the frequency characteristic of the filter 16 to a frequency that is quite different from the frequency of the pump light, so that the pump light is not attenuated and the first superimposition light can be blocked. The difference between the frequency of the pump light and the frequency of the first superimposition light may be set to a few nm, for example.

As illustrated in FIG. 2, the filter 16 may be connected between the EDFA 25 and the optical coupler 40. In other words, the filter 16 may be connected behind the EDFA 25. The filter 16 connected behind the EDFA 25 attenuates or blocks the noise component contained in the return light that has proceeded to the EDFA 25. As a result, the calculation accuracy of the BFS, i.e., the measurement accuracy of the characteristic of the fiber under test 80 is improved.

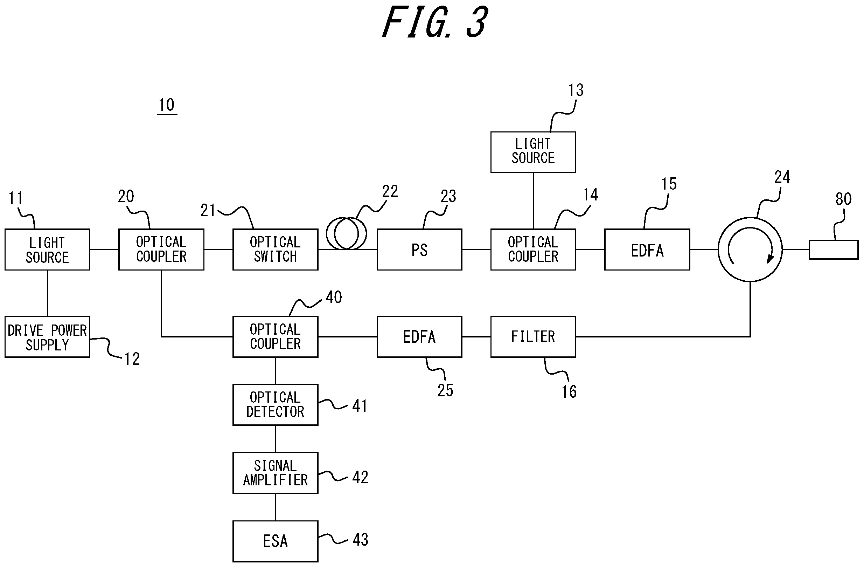

As illustrated in FIG. 3, the filter 16 may be connected between the circulator 24 and the EDFA 25. In other words, the filter 16 may be connected before the EDFA 25. The filter 16 connected before the EDFA 25 reduces the component of the first superimposition light to be input to the EDFA 25. Reducing the component of the first superimposition light to be input to the EDFA 25 increases the gain of the EDFA 25.

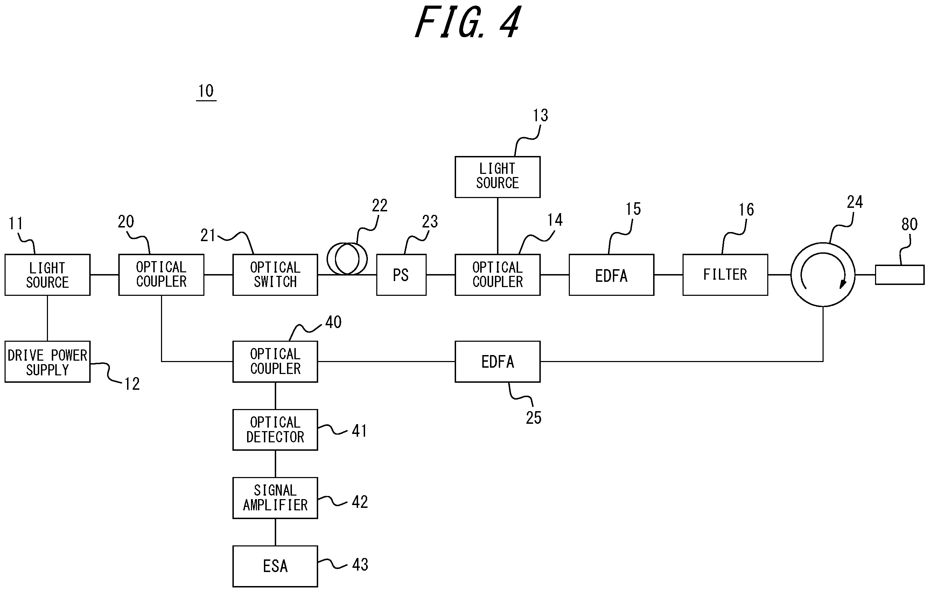

As illustrated in FIG. 4, the filter 16 may be connected between the EDFA 15 and the circulator 24. In other words, the filter 16 may be connected before the fiber under test 80. The filter 16 connected before the fiber under test 80 reduces the component of the first superimposition light to be input into the fiber under test 80. Reducing the component of the first superimposition light to be input into the fiber under test 80 prevents the occurrence of the Brillouin scattered light originating from the component of the first superimposition light. Due to the induced Brillouin scattered light originating from the component of the first superimposition light, the length of the fiber under test 80 is limited. The prevention of the occurrence of the induced Brillouin scattered light originating from the component of the first superimposition light relaxes the limitation on the length of the fiber under test 80.

### <First superimposition light driving method>

The gain of the EDFA 15 is suppressed by combining the first superimposition light with the pump light and inputting the combined light to the EDFA 15. The first superimposition light may be generated so that a superimposition condition is satisfied. In the present disclosure, the superimposition condition is a condition that increases the gain of the EDFA 15 to the extent that the frequency of the occurrence of a giant pulse in the EDFA 15 can be reduced. The superimposition condition may be a condition that maximizes the gain of the EDFA 15 to the extent that no giant pulse occurs in the EDFA 15.

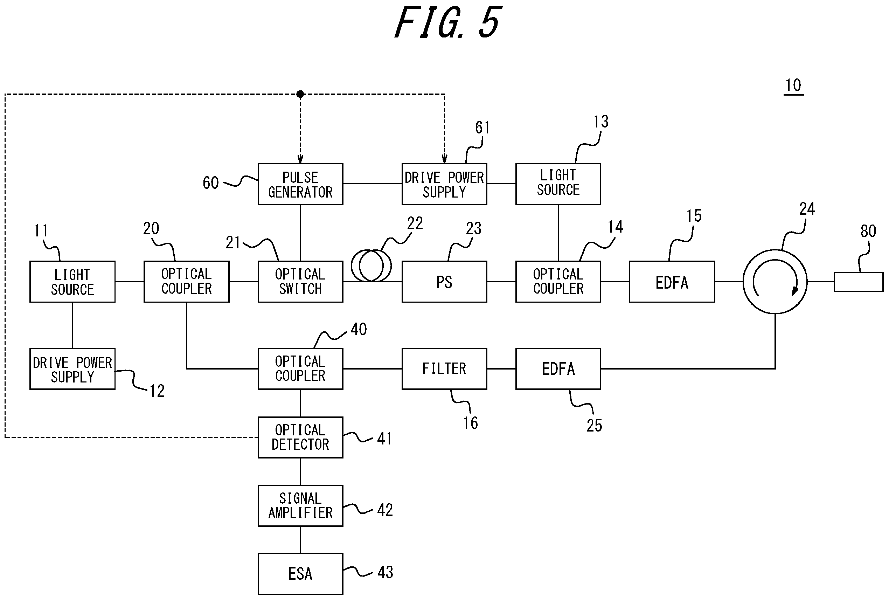

As illustrated in FIG. 5, the optical fiber characteristic measurement apparatus 10 may be provided with a drive power supply 61. The drive power supply 61 drives the light source 13, which generates the first superimposition light, and adjusts the first superimposition light.

The superimposition condition can be satisfied, for example, by adjusting the intensity of a direct current component contained in the first superimposition light. The direct current component is a component of light whose intensity is constant over time. The higher the direct current component of the first superimposition light, the less likely a giant pulse occurs in the EDFA 15, but the lower the gain of the EDFA 15 becomes. Conversely, the lower the direct current component of the first superimposition light, the higher the gain of the EDFA 15 becomes, but the more likely a gain pulse occurs in the EDFA 15. Therefore, the intensity of the direct current component of the first superimposition light may be adjusted as appropriate so that the superimposition condition is satisfied.

The first superimposition light may further contain an alternating current component, in addition to the direct current component. The alternating current component is a component of light whose intensity varies periodically over time. The intensity of the alternating current component may vary according to a sine wave of a single frequency, or may vary according to a waveform that is a mixture of sine waves of multiple frequencies.

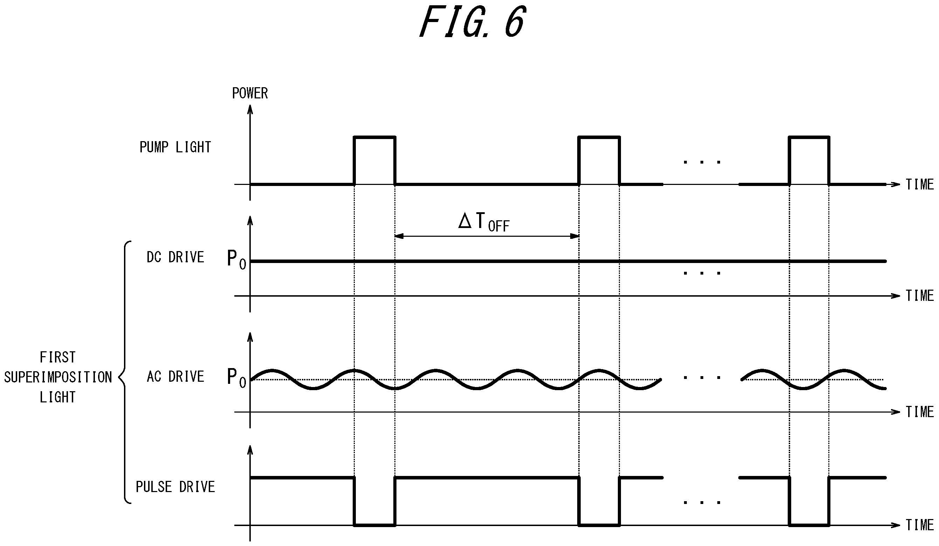

As illustrated in FIG. 6, the light source 13 may emit, by DC drive, the first superimposition light to be superimposed on the pump light converted into the pulsed light, as the direct current component of light. The intensity of the direct current component is represented by P₀. The light source 13 may adjust P₀ so that the superimposition condition is satisfied. When the light source 13 emits the first superimposition light as the direct current component of light, the light source 13 is realized with a simple configuration.

The light source 13 may emit, by AC drive, the first superimposition light as light in which the alternating current component is added to the direct current component. The intensity of the direct current component is expressed by P₀. The light source 13 may adjust P₀ so that the superimposition condition is satisfied.

When emitting the first superimposition light by DC drive or AC drive, the light source 13 may emit the first superimposition light, regardless of time periods during which the pulsed light as the pump light is turned on and time periods during which the pulsed light as the pump light is turned off. The light source 13 may control the intensity of the direct current component of the first superimposition light, based on the length of the time periods (ΔT_{OFF}) during which the pulsed light as the pump light is turned off. The longer the time periods during which the pulsed light as the pump light is turned off, the more the light source 13 may increase the direct current component of the first superimposition light so that the population inversion is less likely to be excessively formed in the EDFA 15. In other words, the excessive population inversion is less likely to be formed in the EDFA 15 by controlling, by the light source 13, the intensity of the direct current component of the first superimposition light based on the length of the time periods during which the pulsed light as the pump light is turned off.

The first superimposition light may be pulsed light. The light source 13 may emit, by pulse drive, the first superimposition light as pulsed light. As illustrated in FIG. 5, the optical fiber characteristic measurement apparatus 10 may be provided with a pulse generator 60. The pulse generator 60 may generate a pulse signal to pulse-drive the drive power supply 61 that drives the light source 13 that emits the first superimposition light, and control the pulse frequency and duty ratio of the first superimposition light. The pulse generator 60 may generate a pulse signal to control the optical switch 21 that converts the pump light into the pulsed light, and control the pulse frequency and duty ratio of the pump light. In other words, the single pulse generator 60 may generate the pulse signal to convert the pump light into the pulsed light and the pulse signal to pulse-drive the light source 13. The pulse signal to convert the pump light into the pulsed light and the pulse signal to pulse-drive the light source 13 may be generated by separate devices.

As illustrated in FIG. 6, the light source 13 may emit the pulsed light as the first superimposition light so that the pulsed light as the first superimposition light is turned on in the time periods (ΔT_{OFF}) during which the pulsed light as the pump light is turned off. The light source 13 may control the time periods during which the pulsed light as the first superimposition light is turned on so that the pulsed light as the first superimposition light is turned on in the time periods during which the pulsed light as the pump light is turned off. By controlling the first superimposition light so that the pulsed light as the first superimposition light is turned on in the time periods during which the pulsed light as the pump light is turned off, the formation of the excessive population inversion in the EDFA 15 is efficiently prevented. The light source 13 may adjust the intensity of the pulsed light when the pulsed light is turned on so that the superimposition condition is satisfied.

Regardless of whether the first superimposition light includes only the direct current component, includes the alternating current component, or is the pulsed light, in other words, regardless of the aspect of the first superimposition light, the superimposition condition is satisfied by adjusting the intensity of the first superimposition light as appropriate.

When the first superimposition light includes the alternating current component, the intensity of the first superimposition light is increased, as compared to when the first superimposition light includes only the direct current component. In addition, when the first superimposition light includes the alternating current component, the limitation on the length of the fiber under test 80 to which the pump light is to be incident is relaxed, as compared to when the first superimposition light includes only the direct current component. In other words, when the first superimposition light includes the alternating current component, the characteristic of the longer fiber under test 80 can be measured, as compared to when the first superimposition light includes only the direct current component.

When the first superimposition light is the pulsed light, the gain of the pump light in the EDFA 15 is increased to the extent that the frequency of the occurrence of a giant pulse can be reduced, as compared to when the first superimposition light includes only the direct current component. Increasing the gain of the pump light improves the measurement accuracy of the fiber under test 80. In other words, by emitting the pulsed light as the first superimposition light, the performance of the optical fiber characteristic measurement apparatus 10 is improved.

The first superimposition light may be adjusted based on the detection intensity of the return light by the light detector 41. For example, the pulse generator 60 or the drive power supply 61 may control the intensity of the direct current component of the first superimposition light, based on the detection intensity of the return light. The higher the detection intensity of the return light, the more the direct current component of the first superimposition light may be increased so that the gain of the pump light is decreased and the frequency of the occurrence of a giant pulse can be further reduced. Conversely, the lower the detection intensity of the return light, the more the direct current component of the first superimposition light may be decreased so that the gain of the pump light is increased to the extent that the frequency of the occurrence of a giant pulse can be reduced. Controlling the intensity of the direct current component of the first superimposition light based on the detection intensity of the return light can achieve both the prevention of the occurrence of a giant pulse in the EDFA 15 and the increase in the gain of the pump light in the EDFA 15, to the extent that the frequency of the occurrence of a giant pulse can be reduced.

The optical fiber characteristic measurement apparatus 10 may be further provided with a control apparatus that controls the pulse generator 60 or the drive power supply 61 to adjust the first superimposition light based on the detection intensity of the return light. The control apparatus may be provided with a processor, a memory, or a communication interface. The control apparatus may be provided with an input device or a display device.

In the optical fiber characteristic measurement apparatus 10, the ESA 43 may be configured to adjust the first superimposition light based on the detection intensity of the return light. The pulse generator 60 or the drive power supply 61 may be configured to adjust the first superimposition light based on the detection intensity of the return light.

### <Example of flowchart of optical fiber characteristic measurement method>

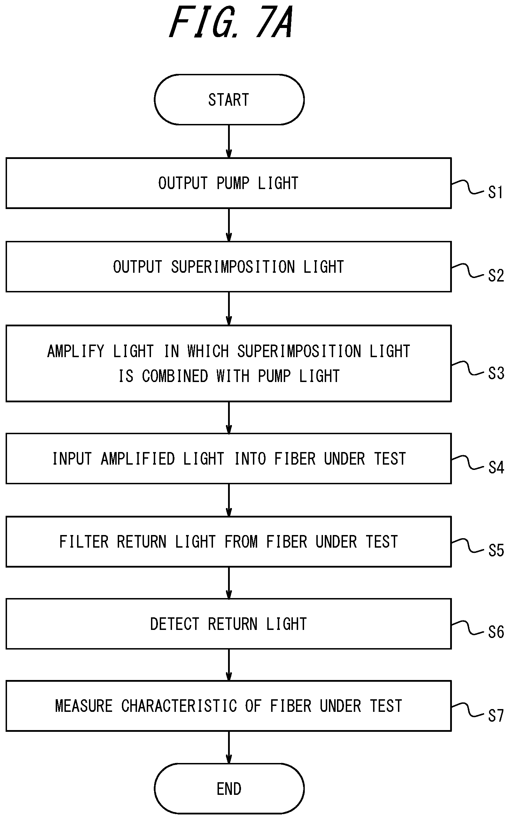

When the filter 16 is connected behind the circulator 24 as illustrated in FIG. 2 or FIG. 3, the optical fiber characteristic measurement apparatus 10 according to the present disclosure may measure the characteristic of the fiber under test 80 by executing an optical fiber characteristic measurement method including the procedure of the flowchart illustrated in FIG. 7A. At least part of the optical fiber characteristic measurement method may be realized as an optical fiber characteristic measurement program that is executed by an arithmetic unit or the like of the ESA 43. The optical fiber characteristic measurement program may be stored on a non-temporary computer readable medium.

The optical fiber characteristic measurement apparatus 10 outputs pump light (step S1). The optical fiber characteristic measurement apparatus 10 according to the present disclosure outputs, from the light source 11, modulated light that is modulated at a modulation frequency, and splits the modulated light into pump light and reference light using the optical coupler 20, and outputs the pump light after converting the split pump light into pulsed light using the optical switch 21.

The optical fiber characteristic measurement apparatus 10 outputs superimposition light to be superimposed on the pump light (step S2). The superimposition light, which is to be superimposed on the pump light, is also referred to as first superimposition light in the present disclosure. The optical fiber characteristic measurement apparatus 10 causes the light source 13 to emit the first superimposition light.

The optical fiber characteristic measurement apparatus 10 amplifies light in which the superimposition light is combined with the pump light (step S3). The optical fiber characteristic measurement apparatus 10 combines the pump light and the superimposition light using the optical coupler 14 and inputs the combined light to the EDFA 15, which amplifies the combined light.

The optical fiber characteristic measurement apparatus 10 inputs the amplified light, which is obtained by amplifying the light in which the superimposition light is combined with the pump light, into the fiber under test 80 (step S4). The optical fiber characteristic measurement apparatus 10 filters, by the filter 16, return light from the fiber under test 80 (step S5). Filtering is attenuation or blocking of a component of the superimposition light contained in the return light. The optical fiber characteristic measurement apparatus 10 may filter the return light before or after amplifying the return light by the EDFA 25.

The optical fiber characteristic measurement apparatus 10 detects the return light by the optical detector 41 (step S6). The optical fiber characteristic measurement apparatus 10 according to the present disclosure outputs, to the optical detector 41, light in which the reference light and the return light are combined by the optical coupler 40, and heterodyne-detects, by the optical detector 41, Brillouin scattered light from the return light.

The optical fiber characteristic measurement apparatus 10 measures the characteristic of the fiber under test 80 based on a detection result of the optical detector 41 (step S7). The optical fiber characteristic measurement apparatus 10 according to the present disclosure measures the characteristic of the fiber under test 80 by generating a BGS of the Brillouin scattered light heterodyne-detected by the optical detector 41 and calculating a BFS.

After the process of step S7 is completed, the optical fiber characteristic measurement apparatus 10 terminates the execution of the procedure in the flowchart in FIG. 7A.

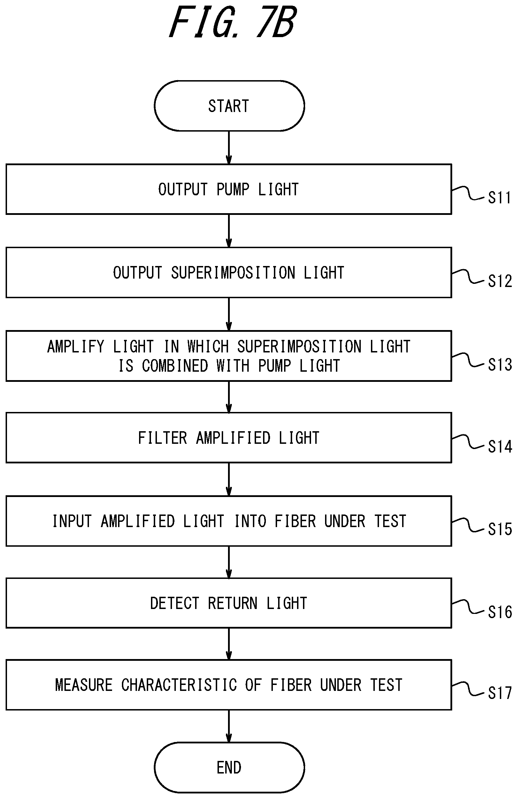

When the filter 16 is connected before the circulator 24 as illustrated in FIG. 4, the optical fiber characteristic measurement apparatus 10 according to the present disclosure may measure the characteristic of the fiber under test 80 by executing an optical fiber characteristic measurement method including the procedure of the flowchart illustrated in FIG. 7B. At least part of the optical fiber characteristic measurement method may be realized as an optical fiber characteristic measurement program that is executed by the arithmetic unit or the like of the ESA 43. The optical fiber characteristic measurement program may be stored on a non-temporary computer readable medium.

The optical fiber characteristic measurement apparatus 10 outputs pump light (step S11). The optical fiber characteristic measurement apparatus 10 may execute the process of step S11 in the same manner as the process of step S1 in FIG. 7A.

The optical fiber characteristic measurement apparatus 10 outputs superimposition light to be superimposed on the pump light (step S12). The optical fiber characteristic measurement apparatus 10 may execute the process of step S12 in the same manner as the process of step S2 in FIG. 7A.

The optical fiber characteristic measurement apparatus 10 amplifies light in which the superimposition light is combined with the pump light (step S13). The optical fiber characteristic measurement apparatus 10 may execute the process of step S13 in the same manner as the process of step S3 in FIG. 7A.

The optical fiber characteristic measurement apparatus 10 filters, by the filter 16, the amplified light obtained by amplifying the light in which the superimposition light is combined with the pump light (step S14). Filtering is the attenuation or blocking of a component of the superimposition light contained in the amplified light. In other words, the optical fiber characteristic measurement apparatus 10 may filter the amplified light before inputting the amplified light into the fiber under test 80.

The optical fiber characteristic measurement apparatus 10 inputs the filtered amplified light into the fiber under test 80 (step S15).

The optical fiber characteristic measurement apparatus 10 detects return light by the optical detector 41 (step S16). The optical fiber characteristic measurement apparatus 10 may execute the process of step S16 in the same manner as the process of step S6 in FIG. 7A.

The optical fiber characteristic measurement apparatus 10 measures the characteristic of the fiber under test 80 based on a detection result of the optical detector 41 (step S7). The optical fiber characteristic measurement apparatus 10 may execute the process of step S17 in the same manner as the process of step S7 in FIG. 7A.

After the process of step S17 is completed, the optical fiber characteristic measurement apparatus 10 terminates the execution of the procedure in the flowchart in FIG. 7B.

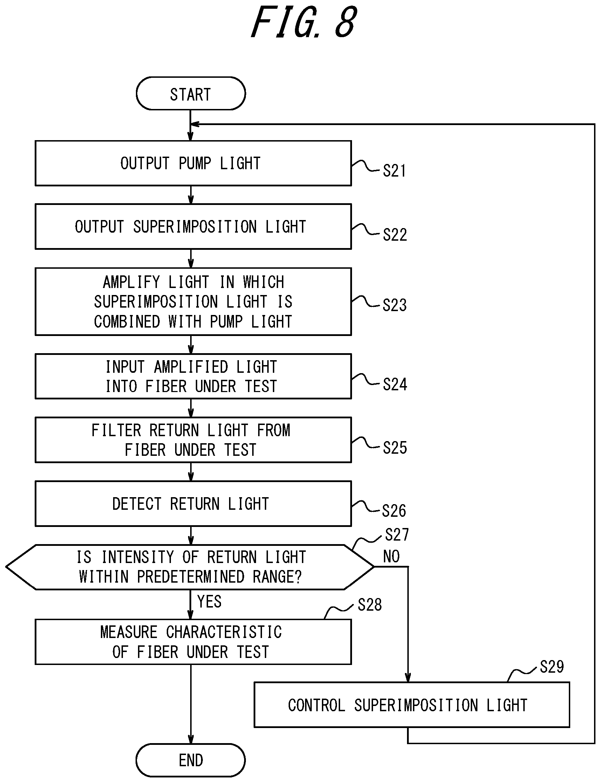

The optical fiber characteristic measurement apparatus 10 according to the present disclosure may control the pulse generator 60 or the drive power supply 61 based on output of the optical detector 41 as illustrated in FIG. 5, by executing an optical fiber characteristic measurement method including the procedure of the flowchart illustrated in FIG. 8. At least part of the optical fiber characteristic measurement method may be realized as an optical fiber characteristic measurement program that is executed by the arithmetic unit or the like of the ESA 43. The optical fiber characteristic measurement program may be stored on a non-transitory computer readable medium.

The optical fiber characteristic measurement apparatus 10 outputs pump light (step S21). The optical fiber characteristic measurement apparatus 10 may execute the process of step S21 in the same manner as the process of step S1 in FIG. 7A.

The optical fiber characteristic measurement apparatus 10 outputs superimposition light to be superimposed on the pump light (step S22). The optical fiber characteristic measurement apparatus 10 may execute the process of step S22 in the same manner as the process of step S2 in FIG. 7A.

The optical fiber characteristic measurement apparatus 10 amplifies light in which the superimposition light is combined with the pump light (step S23). The optical fiber characteristic measurement apparatus 10 may execute the process of step S23 in the same manner as the process of step S3 in FIG. 7A.

The optical fiber characteristic measurement apparatus 10 inputs, into the fiber under test 80, the amplified light obtained by amplifying the light in which the superimposition light is combined with the pump light (step S24). The optical fiber characteristic measurement apparatus 10 filters, by the filter 16, return light from the fiber under test 80 (step S25). The optical fiber characteristic measurement apparatus 10 may execute the processes of steps S24 and S25 in the same manner as the processes of steps S4 and S5 in FIG. 7A.

The optical fiber characteristic measurement apparatus 10 detects the return light by the optical detector 41 (step S26). The optical fiber characteristic measurement apparatus 10 may execute the process of step S26 in the same manner as the process of step S6 in FIG. 7A.

The optical fiber characteristic measurement apparatus 10 determines whether the intensity of the return light detected by the optical detector 41 is within a predetermined range (step S27). The predetermined range may be specified by upper and lower limits of the intensity of the return light. The upper limit of the intensity of the return light may be set as appropriate so that the optical detector 41 is not destroyed. The lower limit of the intensity of the return light may be set as appropriate so that the detection sensitivity of the return light by the optical detector 41 can be improved.

When the intensity of the return light is within the predetermined range (step S27: YES), the optical fiber characteristic measurement apparatus 10 measures the characteristic of the fiber under test 80 based on a detection result of the optical detector 41 (step S28). The optical fiber characteristic measurement apparatus 10 may execute the process of step S28 in the same manner as the process of step S7 in FIG. 7A. After the process of step S28 is completed, the optical fiber characteristic measurement apparatus 10 terminates execution of the procedure in the flowchart in FIG. 8.

When the intensity of the return light is not within the predetermined range (step S27: NO), that is, when the intensity of the return light is outside the predetermined range, the optical fiber characteristic measurement apparatus 10 controls the superimposition light by the pulse generator 60 or the drive power supply 61 (step S29). The optical fiber characteristic measurement apparatus 10 may control the pulse generator 60 or the drive power supply 61 to decrease the intensity of the superimposition light when increasing the intensity of the return light. The optical fiber characteristic measurement apparatus 10 may control the pulse generator 60 or the drive power supply 61 to increase the intensity of the superimposition light when decreasing the intensity of the return light. After executing the process of step S29, the optical fiber characteristic measurement apparatus 10 executes the processes of steps S21 to S26 to redetect the return light.

The optical fiber characteristic measurement apparatus 10 may execute, by the ESA 43, the determination process of the intensity of the return light in step S27 or the control process of the superimposition light in step S29. The optical fiber characteristic measurement apparatus 10 may be further provided with a control apparatus that executes the determination process of the intensity of the return light in step S27 or the control process of the superimposition light in step S29, as an apparatus separate from the ESA 43.

### (Summary)

As described above, the optical fiber characteristic measurement apparatus 10 and the optical fiber characteristic measurement method according to the present disclosure prevent the occurrence of a giant pulse in the optical amplifier, by amplifying the pump light on which the superimposition light is superimposed. In addition, the gain of the pump light in the optical amplifier is increased to the extent that the frequency of the occurrence of a giant pulse in the optical amplifier can be reduced. The increase in the gain of the pump light to be input into the fiber under test 80 increases the intensity of the Brillouin scattered light returned from the fiber under test 80. The increase in the intensity of the Brillouin scattered light enhances the detection accuracy of the BGS and the calculation accuracy of the BFS. The increase in the calculation accuracy of the BFS enhances the measurement accuracy of the characteristic of the fiber under test 80. From the above, the optical fiber characteristic measurement apparatus 10 and the optical fiber characteristic measurement method according to the present disclosure achieve both prevention of the occurrence of a giant pulse in the optical amplifier and improvement in the measurement accuracy of the characteristic of the fiber under test 80 to the extent that the frequency of the occurrence of a giant pulse in the optical amplifier can be reduced.

### (Other embodiments)

Other embodiments will be described below.

### <Example of configuration applied to BOCDA>

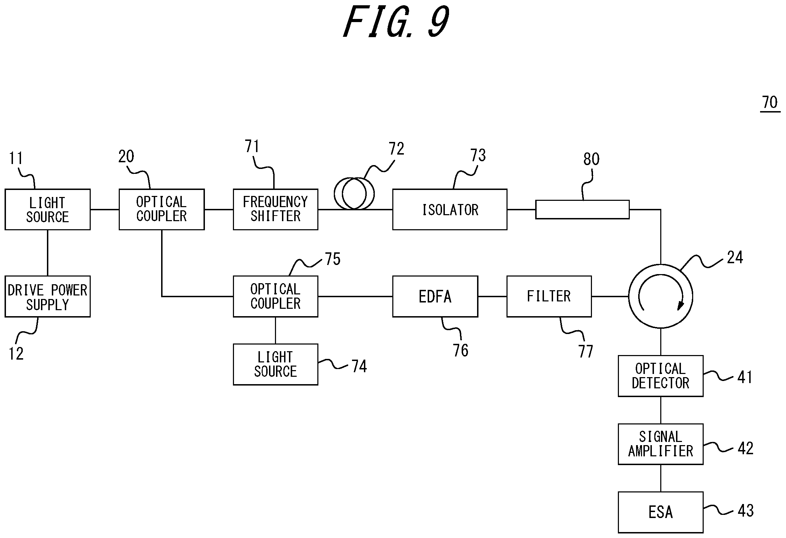

As illustrated in FIG. 9, an optical fiber characteristic measurement apparatus 70 according to another embodiment measures the characteristic of a fiber under test 80 using the Brillouin optical correlation domain analysis (BOCDA). In the BOCDA, the optical fiber characteristic measurement apparatus 70 inputs pump light and probe light from both sides of the fiber under test 80, detects a BGS of Brillouin scattered light having occurred from the pump light and the probe light inside the fiber under test 80, and calculates a BFS to measure the characteristic of the fiber under test 80. In the present disclosure, an end of the fiber under test 80 to which the pump light is input corresponds to a first end. An end of the fiber under test 80 into which the probe light is input corresponds to a second end.

The optical fiber characteristic measurement apparatus 70 is provided with a light source 11, a drive power supply 12, an optical coupler 20, a circulator 24, an optical detector 41, a signal amplifier 42, and an ESA 43. The light source 11 and the drive power supply 12 may be configured in the same manner as the light source 11 and the drive power supply 12 in the optical fiber characteristic measurement apparatus 10 illustrated in FIG. 2 and the like. The optical detector 41, the signal amplifier 42, and the ESA 43 may be configured in the same manner as the optical detector 41, the signal amplifier 42, and the ESA 43 in the optical fiber characteristic measurement apparatus 10 illustrated in FIG. 2 and the like.

The optical coupler 20 may be configured in the same manner as the optical coupler 20 in the optical fiber characteristic measurement apparatus 10 illustrated in FIG. 2 and the like. The optical coupler 20 splits input light into two beams of light, and outputs each of the two beams of light, as the pump light and the probe light.

The optical fiber characteristic measurement apparatus 70 is further provided with a frequency shifter 71, a delay fiber 72, and an isolator 73 between a terminal of the optical coupler 20 that outputs the probe light and an end of the fiber under test 80. The probe light is input from the optical coupler 20 through the frequency shifter 71, the delay fiber 72, and the isolator 73 to the end of the fiber under test 80. The frequency shifter 71 shifts the frequency of the probe light relative to the frequency of the pump light. The delay fiber 72 may be configured in the same manner as the delay fiber 22 of the optical fiber characteristic measurement apparatus 10 illustrated in FIG. 2 and the like. The isolator 73 prevents backflow of light to the light source 11 by attenuating or blocking the light that returns from the fiber under test 80 while allowing the probe light to proceed to the fiber under test 80.

The optical fiber characteristic measurement apparatus 70 is further provided with an optical coupler 75, an EDFA 76, and a filter 77 between a terminal of the optical coupler 20 that outputs the pump light and the fiber under test 80. The circulator 24 is connected between the filter 77 and an end of the fiber under test 80. The pump light is input from the optical coupler 20 through the optical coupler 75, the EDFA 76, the filter 77, and the circulator 24 into the end of the fiber under test 80.

The circulator 24 may be configured in the same manner as the circulator 24 of the optical fiber characteristic measurement apparatus 10 illustrated in FIG. 2 and the like. The circulator 24 directs the pump light from the filter 77 to the end of the fiber under test 80. On the other hand, the circulator 24 directs return light, which contains Brillouin scattered light having occurred inside the fiber under test 80, from the fiber under test 80 to the optical detector 41.

The optical fiber characteristic measurement apparatus 70 is further provided with a light source 74 connected to the optical coupler 75. The light source 74 emits first superimposition light to be superimposed on the pump light. The light source 74 may be configured in the same manner as the light source 13 of the optical fiber characteristic measurement apparatus 10 illustrated in FIG. 2 and the like.

The EDFA 76 is an optical amplifier that amplifies input light and outputs the amplified light. The EDFA 76 may be configured in the same manner as the EDFA 15 of the optical fiber characteristic measurement apparatus 10 illustrated in FIG. 2 and the like. The filter 77 attenuates or blocks a component of the first superimposition light contained in the amplified light and outputs the filtered light to the circulator 24. The filter 77 may be configured in the same manner as the filter 16 of the optical fiber characteristic measurement apparatus 10 illustrated in FIG. 2 and the like.

From the above, the optical fiber characteristic measurement apparatus 70 that measures the characteristic of the fiber under test 80 using the BOCDA can realize both prevention of the occurrence of a giant pulse and improvement in the gain of the pump light to the extent that the frequency of the occurrence of a giant pulse can be reduced, by inputting, to the EDFA 76, the light in which the pump light and the first superimposition light are combined.

### <Combination of superimposition light for EDFA 25>

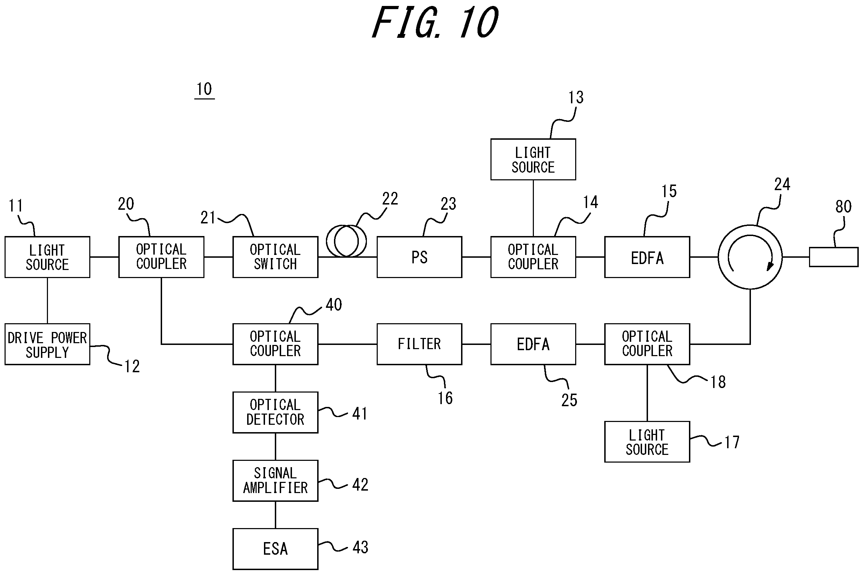

As illustrated in FIG. 10, the optical fiber characteristic measurement apparatus 10 may be further provided with a light source 17 and an optical coupler 18 to superimpose second superimposition light on the return light. The light source 17 is also referred to as a second light source. The optical coupler 18 is connected between the circulator 24 and the EDFA 25. In other words, the optical coupler 18 is connected before the EDFA 25, and inputs, to the EDFA 25, light in which the return light and the second superimposition light are combined.

The light source 17 generates and emits the second superimposition light so that the frequency of the second superimposition light is shifted from the frequency of the Brillouin scattered light contained in the return light by a second superimposition differential frequency. The second superimposition differential frequency is determined according to the characteristics of a filter to be used for separating the second superimposition light from the Brillouin scattered light. The optical coupler 18 outputs, to the EDFA 25, light in which the second superimposition light emitted from the light source 17 is combined with the return light.

The EDFA 25 is an optical amplifier that amplifies the input light and outputs the amplified light. When the EDFA 25 amplifies pulsed light, a giant pulse may occur in the EDFA 25, in the same manner as in the EDFA 15. A component of the Brillouin scattered light contained in the return light occurs in correspondence with the time periods during which the pump light converted into the pulsed light is turned on. On the other hand, the component of the Brillouin scattered light decreases in the time periods during which the pump light is turned off. As a result, when the EDFA 25 amplifies the component of the Brillouin scattered light, the formation of excessive population inversion, while the component of the Brillouin scattered light is decreasing, causes the occurrence of a giant pulse.

Therefore, by inputting, to the EDFA 25, the light in which the second superimposition light is combined with the return light containing the component of the Brillouin scattered light, the formation of excessive population inversion in the EDFA 25 is prevented. As a result, the occurrence of a giant pulse in the EDFA25 is prevented.

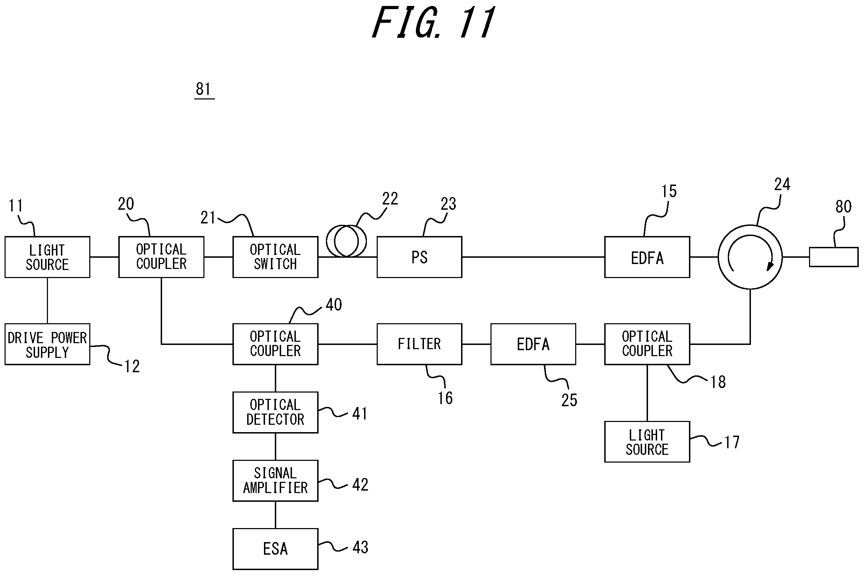

As illustrated in FIG. 11, the optical fiber characteristic measurement apparatus 10 may not be provided with the light source 13 and the optical coupler 14 used for superimposing the first superimposition light on the pump light. In this case, although the gain of the EDFA 15 is limited, the component of the Brillouin scattered light contained in the return light from the fiber under test 80 is amplified by the EDFA 25. In addition, the occurrence of a giant pulse in the EDFA 25 is prevented. As a result, the calculation accuracy of the BFS, i.e., the measurement accuracy of the characteristic of the fiber under test 80 is improved.

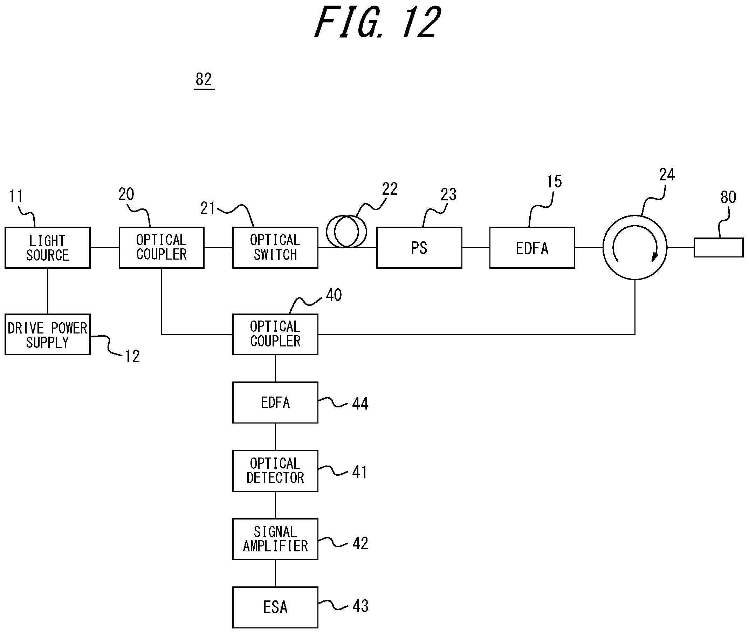

As illustrated in FIG. 12, the optical fiber characteristic measurement apparatus 10 may be provided with an EDFA 44 between the optical coupler 40 and the optical detector 41, without a configuration for superimposing the first superimposition light and the second superimposition light. In other words, the EDFA 44 may be connected behind the optical coupler 40.

In this case, the return light and the reference light are combined in the optical coupler 40, and the combined light is input to the EDFA 44. The reference light is light that is split from the pump light in the optical coupler 20. Therefore, the frequency of the reference light is the same as the frequency of the pump light. On the other hand, the frequency of the component of the Brillouin scattered light contained in the return light is different from the frequency of the pump light and the reference light. Therefore, superimposing the reference light on the return light prevents the formation of excessive population inversion when the EDFA 44 amplifies the component of the Brillouin scattered light contained in the return light. In other words, the reference light functions as superimposition light. As a result, the occurrence of a giant pulse in the EDFA 44 is prevented.

The reference light is used to detect the BGS from the Brillouin scattered light, so the reference light does not need to be attenuated by a filter. In other words, when the reference light functions as superimposition light to be superimposed on the return light, the optical fiber characteristic measurement apparatus 10 does not need to be provided with a filter that attenuates or blocks the superimposition light. As a result, the configuration of the optical fiber characteristic measurement apparatus 10 is simplified.

Also, when the EDFA 44 is connected behind the optical coupler 40, the optical fiber characteristic measurement apparatus 10 does not need to be provided with the light source 13 and the optical coupler 14 used for superimposing the first superimposition light before the EDFA 15. In this case, although the gain of the EDFA 15 is limited, the component of the Brillouin scattered light contained in the return light from the fiber under test 80 is amplified by the EDFA 44. In addition, the occurrence of a giant pulse in the EDFA 44 is prevented. As a result, the calculation accuracy of the BFS, i.e., the measurement accuracy of the characteristic of the fiber under test 80 is improved.

The embodiments according to the present disclosure have been described above with reference to the drawings, but the specific configuration is not limited to these embodiments, and various modifications are also included within the scope of not deviating from the gist of the present disclosure.

## Claims

1. An optical fiber characteristic measurement apparatus (10) comprising:
a first light source (13) configured to emit first superimposition light to be superimposed on pump light;
a pump light amplifier (15) configured to amplify light in which the pump light and the first superimposition light are combined;
a circulator (24) configured to cause amplified light output from the pump light amplifier (15) to be incident on a first end of a fiber under test (80), and configured to take out return light from the fiber under test (80);
a filter (16) configured to attenuate a component of the first superimposition light contained in at least one of the amplified light or the return light; and
a measurement unit (43) configured to measure a characteristic of the fiber under test (80) by detecting the return light.

2. The optical fiber characteristic measurement apparatus (10) according to claim 1, wherein the filter (16) is connected between the circulator (24) and the measurement unit (43).

3. The optical fiber characteristic measurement apparatus (10) according to claim 1 or 2, wherein the filter (16) is connected between the pump light amplifier (15) and the circulator (24).

4. The optical fiber characteristic measurement apparatus (10) according to any one of claims 1 to 3, wherein the first light source (13) is configured to emit the first superimposition light as a direct current component of light.

5. The optical fiber characteristic measurement apparatus (10) according to any one of claims 1 to 4, wherein the first light source (13) is configured to emit the first superimposition light as light with a direct current component and an alternating current component.

6. The optical fiber characteristic measurement apparatus (10) according to claim 4 or 5, wherein the first light source (13) is configured to control intensity of the direct current component based on detection intensity of the return light.

7. The optical fiber characteristic measurement apparatus (10) according to any one of claims 4 to 6, wherein the first light source (13) is configured to control intensity of the direct current component based on a length of a time period during which pulsed light is turned off, when the pulsed light is emitted as the pump light.

8. The optical fiber characteristic measurement apparatus (10) according to any one of claims 1 to 3, wherein the first light source (13) is configured to emit the first superimposition light as pulsed light.

9. The optical fiber characteristic measurement apparatus (10) according to claim 8, wherein the first light source (13) is configured to control a time period during which the first superimposition light is turned on, so that the pulsed light as the first superimposition light is turned on in a time period during which pulsed light as the pump light is turned off.

10. The optical fiber characteristic measurement apparatus (10) according to any one of claims 1 to 9, further comprising:
a second light source (17) configured to emit second superimposition light to be superimposed on the return light; and
a return light amplifier (25) configured to amplify light in which the return light and the second superimposition light are combined.

11. The optical fiber characteristic measurement apparatus (10) according to any one of claims 1 to 10, further comprising an optical coupler (20) configured to split, from the pump light, reference light to be combined with the return light in order to detect the return light.

12. The optical fiber characteristic measurement apparatus (10) according to any one of claims 1 to 10, further comprising an optical coupler (20) configured to split, from the pump light, probe light to be incident on a second end of the fiber under test (80), the second end being opposite to the first end.

13. An optical fiber characteristic measurement method comprising:
emitting first superimposition light to be superimposed on pump light;
amplifying light in which the pump light and the first superimposition light are combined;
causing amplified light to be incident on a first end of a fiber under test (80);
taking out return light from the fiber under test (80);
attenuating a component of the first superimposition light contained in at least one of the amplified light or the return light; and
measuring a characteristic of the fiber under test (80) by detecting the return light.
